# EUROPEAN PATENT APPLICATION

(11) **EP 4 461 586 A2**
(43) Date of publication of application: **13.11.2024**
(21) Application number: 24198747.8
(22) Date of filing: 05.09.2024
(51) Int. Cl.: B60L 53/10, B60L 53/30, H02M 1/00

(54) **INPUT LOW-PASS PASSIVE FILTER AND FILTERING METHOD**

(71) Applicant: Ekoenergetyka - Polska Spolka Akcyjna, 66-002 Zielona Gora (PL)
(72) Inventor: Rusinski, Jacek, 66-002 Zielona Gora (PL); Jarnut, Marcin, 66-004 Zielona Gora (PL)
(74) Representative: Grzelak, Anna

(57) **Abstract**

The subject of the invention is an input low-pass passive filter and a filtering method intended for charging stations for electric vehicles with direct current and powered from the DC traction network.

The subject of the invention is input low-pass passive filter with a gamma topology, wherein a semiconductor diode D is connected in the reverse direction in parallel with the inductive reactance element L.

The subject of the invention is a method of filtering using an input low-pass passive filter according to invention, wherein the reactive nature of the reactance element is eliminated with a step increase in the filter input current **IF_in** towards the traction network caused by a step drop in voltage in this network and voltage oscillations at the input of the charging station stimulated by the operation of the output current stabilization system **I_out** of the charging station are also eliminated in the **DC/DC** converter.

## Description

### TECHNICAL FIELD

The subject of the invention is an input low-pass passive filter and a filtering method intended for direct current (DC) charging stations for electric vehicles and supplied from the DC traction network.

### STATE OF TECHNOLOGY

Fast charging stations for electric vehicles are usually supplied from AC distribution networks.

From the European patent description EP3521095B1**,** a device for charging electric vehicle batteries is known, containing: - input terminals electrically connected to an alternating current power source; - output terminals electrically connected to a DC power source; - a rectifier stage electrically connected to said input terminals, said rectifier stage being adapted to receive a first voltage and a first alternating current and to supply a second voltage and a second direct current; - a DC/DC conversion stage electrically connected between
said rectification stage and said output terminals, said DC/DC conversion stage being adapted to input said second voltage and said second current and to output said third voltage and third
current for said electric charge, wherein said third current has a DC component and an AC component superimposed on each other. An electric vehicle battery charging device comprises an active filter stage electrically connected to said output terminals in parallel to said DC/DC conversion stage, said active filter stage being adapted to output, for said electric charge, a fourth alternating current having a wave shape such that suppress or eliminate the alternating component of said third current.

From the German patent application DE4410069A1**,** a circuit is known that produces a regulated direct voltage by rectifying an alternating current source. DC voltage is free from harmonics. The circuit uses a controlled rectifier with a filter. Behind the filter, there is a smoothing choke with a series connection of a magnetically coupled coil with the choke and capacitor. Both the choke and the coil have no core and are electrically connected on the load side.

From the Polish patent application P.440855, an electric vehicle charger is known, which includes an AC-DC input converter powered from an external network, an electric energy battery, a DC-DC converter for charging an electric vehicle, an electric vehicle connection and a controller configured to connect the DC-DC converter with the converter AC DC input or electric energy accumulator and with an electric vehicle connection for charging the electric vehicle or charging the electric energy accumulator. Furthermore, the charger includes at least one additional DC-DC converter and an output DC-AC inverter to the external network, and the controller is configured to additionally connect based on signals coming from the electric vehicle and/or from the energy storage and/or external network of the second DC converter - DC with energy storage and with an electric vehicle connection and/or with a DC-AC output inverter to the external grid for transferring energy from the energy storage to charging the electric vehicle or transferring energy from the energy storage to the external grid. The filing also disclosed a network of chargers for charging electric vehicles.

Another Polish patent application, P.440997**,** discloses a charging station for electric vehicles and an autonomous system and method for adapting the operation of an electric vehicle charging station to the conditions in the power grid, in particular with particular emphasis on the characteristics of the lighting network. The charging station has at least one autonomous control system, which includes a cooperating communication module, charging control module, database module, and prediction module, with the prediction module designed to detect and predict loads and disturbances in the network circuit based on historical data and/or generated statistical models and/or rule system is connected to a communication module that performs data transmission between devices/receivers connected to the network circuit, wherein the communication module is coupled to a database module designed to store operating state parameters of said devices/receivers connected to network circuit and with a charging control module 10 that dynamically adjusts the characteristics of the electric vehicle charging current in relation to the operating status parameters of devices/receivers connected to the network circuit.

There are also known solutions in which charging stations are connected to DC traction networks intended to power urban traction vehicles such as trams or trolleybuses. The operating characteristics of traction vehicles include high load variability and the accompanying large changes in the current that the vehicles load on the traction network, especially when starting from stops or re-supplying the network during regenerative braking. For this reason, very large voltage fluctuations occur locally in the traction network, which may negatively affect the operation of devices such as electric vehicle charging stations connected to this network. The charging parameters of electric vehicles are stabilized by the DC charging station during the charging process, and the charging voltage and current values must correspond to the values required by a given vehicle. In case of deviations beyond the permissible error limits, the process is interrupted for safety reasons. Although DC charging stations are equipped with power electronic converters that stabilize the output voltage and current, the range of supply voltage changes at which this stabilization is effective and possible is limited. In DC traction networks, voltage fluctuations are much higher and more dynamic than in AC distribution networks, hence, there is a real need to use passive input filters to reduce voltage fluctuations at the point of installation of charging stations. Classic, low-pass passive filters installed at the input of the charging station reduce the amplitude of fast-changing voltage fluctuations, but due to the additional series impedance occurring in them, they deepen the effect of voltage drop in the event of activation of the power stabilization system at the output of the charging station during the charging process of an electric vehicle.

The existing solutions do not allow maintaining the set charging power, with a reduced voltage at the input of the charging station, the current on the traction network side increases, which generates an increase in the voltage drop on the series impedance of the filter and on the series impedance of the traction network. As a result, oscillations may occur in the input voltage of the charging station caused by energy changes in the reactance elements of the filter, leading to the inability to stabilize the output power of the charging station and further to the interruption of the charging process. In the case of electric buses that are part of critical infrastructure, this is unacceptable because it may lead to disruptions in the functioning of public transport.

### DISCLOSURE OF THE INVENTION

The technical problem solved by the invention is to extend the scope and enable the correct operation of DC charging stations for electric vehicles powered by DC traction networks or other DC networks characterized by increased short-circuit resistance at the charging station's power supply point, and thus characterized by a wide range of voltage fluctuations in the as a result of dynamic load changes. Extending this range and enabling the correct operation of charging stations for electric vehicles powered by the DC traction network is achieved by reducing supply voltage fluctuations at the input of the charging station resulting from dynamic load changes.

In light of the described state of technology, the purpose of the present invention is to overcome the indicated disadvantages and provide a device that reduces voltage dips at the input of the charging station, enabling the correct operation of the charger with voltage fluctuations at its input, with a reduced voltage at the input of the charging station, which is obtained by using an input low-pass passive filter and a filtering method that reduces the voltage dip caused by a sudden increase in the load value of the DC power supply network when the input current increases abruptly.

The input low-pass passive filter with a gamma topology wa semiconductor diode **D** is connected in the reverse bias direction in parallel with the inductive reactance element **L.** Preferably (it is advantageous that), the starting resistor **R1** is connected in series with the inductive reactance element **L.**

The filtering method uses an input low-pass passive filter as defined above wherein the reactive nature of the reactance element is eliminated during a step increase in the filter input current **IF_in** towards the traction network caused by a step voltage drop in this
network and also eliminates voltage oscillations at the station input charging stimulated by the activation of the **I_out** output current stabilization system of the charging station in the **DC/DC** converter.

Preferably, the filter's starting current is limited each time it is connected to the traction network using the **W_IN** switch, using the starting resistor **R1** connected to the series inductive reactance element **L,** through which the parallel capacitance **C** of the filter is charged, and then the starting resistor **R1** is short-circuited with **ST_11** normally open contacts of the **ST** contactor included in the soft start system **6** connected in parallel to the terminals of this resistor and opens automatically each time the charging station is disconnected from the traction network using the **W_IN** switch.

Preferably, the moment of short-circuit of the starting resistor **R1** is delayed by the time resulting from the set timer setting of the additional time relay **K** included in system **6,** whose normally open contacts **K_11** are connected in series in the supply circuit of the **ST** contactor coil from the power supply **PS** also included in system **6.**

The advantage of the applied solution is the elimination of the reactive nature of the reactance element with a sudden increase in the filter input current towards the traction network caused by a sudden drop in voltage in this network and thus also the elimination of voltage oscillations at the input of the charging station stimulated by the activation of the output current stabilization system of the charging station in the DC/DC converter.

Another advantage is the limitation of the starting current using the filter's starting resistor each time it is connected to the traction network using a switch, which, after initial charging of the filter's parallel capacitance, is short-circuited by the normally open contacts of the contactor included in the soft start system connected in parallel to the terminals of this resistor and opened automatically every time the charging station is disconnected from the traction network using a switch.

### BRIEF DESCRIPTION OF THE DRAWING FIGURES

For a better understanding of the invention, it is illustrated in embodiments and in the accompanying drawings, in which:
**Fig. 1****-** shows a simplified schematic diagram of a charging station with an input filter supplied from the traction network;
**Fig. 2** **-** shows an illustration of the filter operation during a voltage dip in the traction network;
**Fig. 3** **-** shows an illustration of the operation of the filter starting current limiting system.

The device in the attached figures is shown for illustrative purposes only, but the final shape and the arrangement of individual elements will depend on the nature of the charging station and the current characteristics.

### METHODS OF MAKING THE INVENTION

The following examples illustrate the invention without limiting it in any way.

### Example 1. Input low-pass passive filter

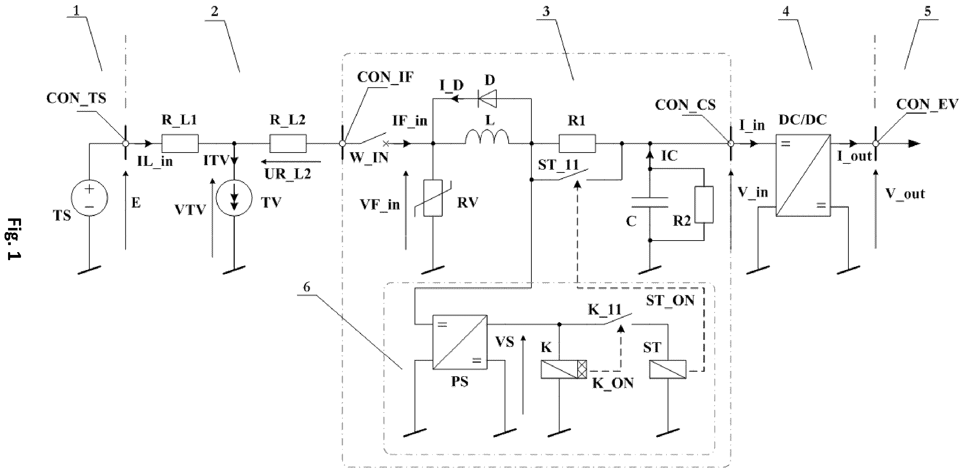

**Figure 1** shows the filter according to the invention, which in the given example extends the scope and enables the correct operation of a DC charging station for electric vehicles, powered by a DC traction network, characterized by a wide range of voltage fluctuations resulting from dynamic load changes. Extending the operating range of charging stations for electric vehicles powered by the **DC** traction network is achieved by reducing supply voltage fluctuations at the input of the charging station resulting from dynamic load changes.

The passive low-pass filter of charging station **3** on the side of the **CON_IF** input terminals is connected to the traction network terminals **2** through the **W_IN** switch. The traction network is powered by traction substation **1,** represented by a voltage source **TS** with voltage **E,** to the **CON_TS** terminals to which the traction network is connected, the resistance of which is represented by resistors **R_L1** and **R_L2,** describing, respectively, the line resistance between traction substation **1** and the traction vehicle represented by the **TV** current source and between the **TV** traction vehicle and the **CON_IF** input terminals of the low-pass passive filter **3** of charging station **4.** From the output terminals side, filter **3** is connected to the **CON_CS** input terminals of charging station **4.** The output of the charging station is connected to the **CON_EV** terminals of the charged electric vehicle **5.** The low-pass input filter **3** with a gamma topology, in its structure in the serial branch, contains an inductive reactance element **L,** the first terminal of which is connected to the terminal of the **W_IN** switch and the second terminal of the reactance element L is connected to the first terminal of the resistor **R1,** the second terminal of which is connected to the parallel branch of the filter containing a capacitive reactance element **C,** to which the discharge resistor **R2** is connected in parallel. In parallel to the input of filter **3,** a surge arrester **RV** is connected, the first end of which is connected to the first end of the reactance element **L** and the other end to the system ground. In parallel to the terminals of the inductive reactance element **L,** a semiconductor diode **D** is connected, the cathode of which is connected to the first terminal of the inductive reactance element L and the first terminal of the surge arrester **RV,** while the anode is connected to the second terminal of the reactance element **L** and the first terminal of resistor **R1.** In parallel to the terminals of resistor **R1,** the **ST_11** make contact of the **ST** contactor of the soft start system **6** is connected. The coil of the **ST** contactor is connected to the make contact of relay **K,** the coil of which is connected to the output of the **PS** power supply, the input terminals of which are connected between the ground and the first terminal of resistor **R1.** The input low-pass passive filter of charging stations for electric vehicles powered by the **DC** traction network, according to the invention, has a gamma topology and low-pass characteristics.

It is connected via the **W_IN** switch between the terminals of the **DC** traction network characterized by large, step voltage changes and the input terminals of the **CS** charging station
equipped with **DC/DC** converters that regulate and stabilize the charging current and voltage on the output side of this station during the charging processes of electric vehicles.

In the series branch of the filter, an inductive series reactance element **L** and a series starting resistor **R1** are connected to the filter input terminals.

In the parallel branch of the filter, on the side of the output terminals, a capacitive reactance element **C** is connected, to whose terminals a discharge resistor **R2** is connected in parallel, discharging the energy contained in the capacitance of element **C** after each disconnection of the filter from the **DC** traction network and reducing the voltage of this element to a safe value in time no longer than 5 minutes.

In parallel to the filter input terminals, an **RV** surge arrester is connected, limiting the instantaneous value of the voltage at the filter input terminals below the selected voltage threshold **VF_in_max.** The **ST_11** make contact is connected in parallel to the terminals of the series starting resistor **R1,** shorting the **R1** resistor after initial charging of the capacitance of element **C** each time the filter is connected to the traction network via the **W_IN** switch. The **ST_11** contact is the contact of the **ST** contactor, which is an element of the starting system **6,** which also includes the **PS** power supply connected with a positive terminal between the series elements of the filter, i.e., elements **L** and **R1,** the time relay **K,** the coil of which is connected to the output terminals of the **PS** power supply, and the make contact **K_11** between these terminals and the **ST** contactor coil.

### Example 2. Input low-pass passive filter

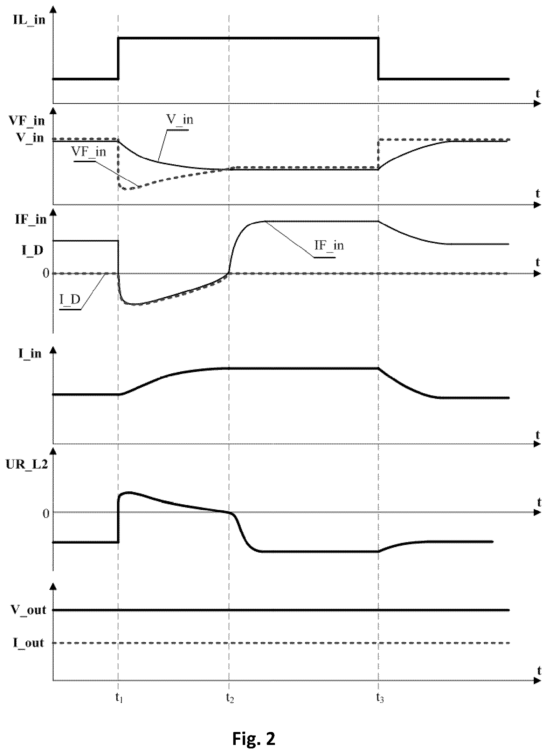

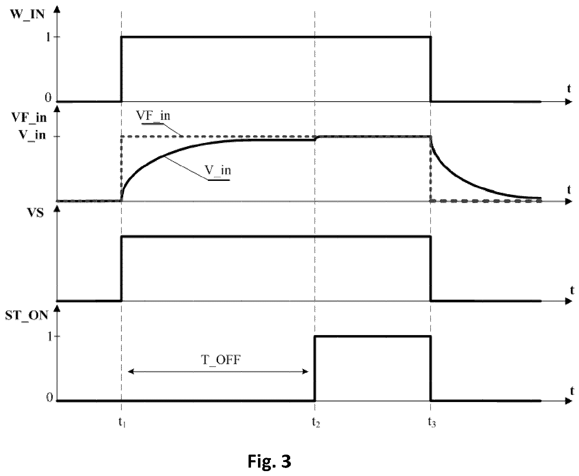

**Figure 2** shows the operation of the filter during a voltage dip in the overhead line. **Figure 3** shows the operation of the starting current limiting system **6** included in the filter according to the invention.

The filter, according to the invention, uses a starting current limiting system in which, after each time the filter is connected to the traction network using the **W_IN** switch, the current resulting from the difference in the voltage of the traction network and the voltage of the capacitive reactance element **C** is limited by the series element **R1** of resistive nature.

The resistance value of this element is selected in such a way that the peak value of the filter input current resulting from the maximum possible voltage difference on this element does
not trigger the overcurrent protection installed at the point where the filter is connected to the traction network. The **R1** element is then short-circuited by the **ST_11** contacts of the **ST** contactor connected in parallel after the **T_OFF** time set in the **K** time relay included in the soft start system **6.** The operation of the soft start system **6** is initiated in such a way that the **K** relay coil is powered by the **PS** power supply, which, after closing the **W_IN** switch, puts voltage **VS** on the terminals of the **K** relay coil, initiating the process of counting down the delay time equal to the **T_OFF** setting. After this time, the relay closes, its **K_11** make contacts, allowing current to flow through the **ST** contactor coil, and, as a result, its **ST_11** make contacts close.

The delay time **T_OFF** is selected in such a way that, with the selected resistance value of the **R1** element, after the set delay time, the difference in the voltage of the traction network and the voltage of the reactance element **C** is minimal, and does not exceed several volts.

After disconnecting the filter from the traction network caused by turning off the **W_IN** switch, the output voltage of the **PS** power supply drops to zero, causing the K relay to turn off and its **K_11** contacts to open, the **ST** contactor to turn off and its **ST_11** contacts to open, and as a result, the **R1** element to open as well.

In this way, the soft starting system **6** is automatically prepared for the next process of connecting the traction network filter with starting current limitation. At the same time, the resistor **R2** permanently connected to the terminals of element **C** discharges its energy, reducing the voltage on its terminals to a safe value. The resistance of this element is selected in such a way that the voltage **V_in** is reduced to a safe value in no more than **5** minutes.

### Example 3. Filtering method

The method is used in a device identical to **example 1.**

The method consists of eliminating the reactive nature of the reactance element with a step increase in the filter input current **IF_in** towards the traction network caused by a step drop in voltage in this network and also eliminating voltage oscillations at the input of the charging station stimulated by the operation of the output current stabilization system **I_out** of the charging station in **DC/DC** converter.

### LIST OF MARKINGS:

**1.** traction substation;
**2.** traction line;
**3.** input low-pass passive filter;
**4.** charging station;
**5.** Electric vehicle;
**6.** Soft start system;

**AC** - Alternating current;
**C** - Capacitor;
**CON_CS** - Charging station input terminals;
**CON_EV** - Electric vehicle charging terminals;
**CON_IF** - Filter input terminals;
**CON_TS** - Output terminals of traction substation;
**CS** - Charging station input terminals;
**D** - Semiconductor diode;
**DC** - DC traction network;
**DC/DC** - Converter;
**I_in** - Input current of charging station ;
**I_out** - Output current of charging station ;
**IF_in** - Filter input current;
**K** - Time relay;
**K_11** - Normally open contacts of time relay;
**L** - Reactance element;
**PS** - Power supply;
**R_L1** - Resistance of the traction line between the traction station and the traction vehicle;
**R_L2** - Traction line resistance between the traction vehicle and the low-pass filter input terminals;
**R1** - Starting resistor;
**R2** - Discharge resistor;
**RV** - Surge arrester;
**SOFT START** - Soft start system;
**ST** - Contactor;
**ST_11** - Normally open contacts ;
**T_OFF** - Delay time;
**TS** - Traction substation;
**TV** - Traction vehicle;
**V_out** - Output voltage of charging station;
**U_RL2** - Voltage drop across the resistance of the traction line;
**V_in** - Input voltage of charging station;
**VF_in_max** - Voltage threshold;
**VTV** - Supply voltage of the traction vehicle;
**W_IN** - Switch.

## Claims

1. An input low-pass passive filter with a gamma topology, **characterised in that** a semiconductor diode **D** is connected in the reverse direction in parallel with the inductive reactance element **L.**

2. The input low-pass passive filter, according to claim 1., **characterised in that** the starting resistor **R1** is connected in series with the inductive reactance element **L.**

3. A method of filtering using an input low-pass passive filter as defined in claims 1 - 2 **characterised in that** the reactive nature of the reactance element is eliminated with a step increase in the filter input current **IF_in** towards the traction network caused by a step drop in voltage in this network and voltage oscillations at the input of the charging station stimulated by the operation of the output current stabilization system **I_out** of the charging station are also eliminated in the **DC/DC** converter.

4. The filtering method according to claim 3, **characterised in that** the filter's starting current is limited each time it is connected to the traction network using the **W_IN** switch, using the starting resistor **R1** connected to the series reactance element **L** of an inductive nature, through which the parallel capacitance C of the filter is charged, and then the starting resistor **R1** is shorted by the **ST_11** make contacts connected in parallel to the terminals of this resistor of the **ST** contactor included in the soft start system **6** and opens automatically each time the charging station is disconnected from the traction network using the **W_IN** switch.

5. The filtering method according to claim 3, **characterised in that** the moment of short-circuit of the starting resistor **R1** is delayed by the time resulting from the established setting of the timer system of the additional time relay **K** included in system **6,** whose normally open contacts **K_11** are connected in series in the supply circuit of the **ST** contactor coil from the power supply **PS** also included in composition of the system **6.**
